# EUROPEAN PATENT APPLICATION

(11) **EP 4 401 161 A1**
(43) Date of publication of application: **17.07.2024**
(21) Application number: 22866995.8
(22) Date of filing: 23.05.2022
(51) Int. Cl.: H01M 4/06, H01M 6/08

(54) **ALKALINE BATTERY**

(30) Priority: 08.09.2021 JP 2021146001
(71) Applicant: Panasonic Intellectual Property Management Co., Ltd., Kadoma-shi, Osaka 571-0057 (JP)
(72) Inventor: FUJIWARA Michiko, Kadoma-shi, Osaka 571-0057 (JP)
(74) Representative: Novagraaf International SA
(86) International application number: PCT/JP2022/021058
(87) International publication number: WO 2023/037665

(57) **Abstract**

An alkaline battery includes a positive electrode, a negative electrode, and a separator. The negative electrode includes zinc alloy powder, gelling agent, surface active agent, and electrolyte. The zinc alloy powder includes zinc alloy particles. A proportion of the zinc alloy particles with respect to zinc alloy powder that passes through a mesh having an aperture width of 75 µm ranges from 9 mass % to 28 mass %. The zinc alloy powder has a bulk density ranging from 2.7 g/cm³ to 3.2 g/cm³. A content of the zinc alloy powder in the negative electrode ranges from 60 mass % to 64 mass %.

## Description

### TECHNICAL FIELD

The present disclosure relates to alkaline batteries.

### BACKGROUND ART

Alkaline batteries (alkaline-manganese batteries) are widely used due to their higher battery capacity and higher output current than manganese batteries. An alkaline battery includes alkaline electrolyte, a positive electrode, a negative electrode, a separator disposed between the positive electrode and the negative electrode. The positive electrode contains manganese dioxide as positive electrode active material. Various proposals have been made for enhancing characteristics of alkaline batteries.

PTL 1 (Japanese Patent No. 6335531) discloses an alkaline battery wherein an alkaline electrolyte, a gelling agent, and a gelled negative electrode including a powder containing zinc as a main component are accommodated in a closed-bottomed cylindrical positive electrode can. The alkaline battery is characterized in that: the powder contains particles having a particle size of less than or equal to 75 µm in a range of 25 mass% to 40 mass%; the gelling agent contains a water-absorbing resin having a water absorption capacity for the alkaline electrolyte (water absorption capacity for 40 mass% potassium hydroxide solution) of greater than or equal to 37 times; and the maximum short-circuit current is higher than or equal to 15 A, after the positive electrode can is supported at a height of 1 m with its axial direction being horizontal to the ground, and is then allowed to freely fall from the supported position onto a concrete floor.

PTL 2 (Japanese Patent No. 4729321) discloses an alkaline battery wherein: a tubular-shaped separator is fitted inside an annular-shaped positive electrode mixture fitted in a closed-bottomed cylindrical battery can with its underside being a bottom part; a negative electrode gel containing zinc or a zinc alloy as a negative electrode active material is filled only on an inside of the separator; and a rod-shaped negative electrode current collector, connected to a lower surface of a negative electrode terminal plate that seals an opening of the battery can, is penetrated in a center part of the negative electrode gel so that the negative electrode current collector extends in a cylinder axis direction of the battery can. The alkaline battery is characterized in that a negative electrode gel layer with a relatively high viscosity and a negative electrode gel layer with a relatively low viscosity exist in the negative electrode gel in a stacked condition with an extension direction of the cylinder axis being a stacking direction, whereby a flow of the negative electrode gel is inhibited.

PTL 3 (Japanese Patent Laid-Open Publication No. 2014-7002) discloses an alkaline battery wherein: a hollow cylindrical-shaped positive electrode, a gelled negative electrode containing zinc and a gelling agent, a separator disposed between the positive electrode and the gelled negative electrode, and an alkaline electrolyte are accommodated in a closed-bottomed cylindrical battery case, the positive electrode, the gelled negative electrode. The alkaline battery is characterized in that: the gelling agent comprises one kind of polyacrylic acid salt; the concentration of the polyacrylic acid salt in the gelled negative electrode is in a range of 0.4 mass % to 1.0 mass %; the concentration of the zinc in the gelled negative electrode is in a range of 55 mass % to 70 mass %; and the bulk density of the zinc is set in a range of 2.50 g/mL to 3.00 g/mL.

PTL 4 (Japanese Patent Laid-Open Publication No. 2014-170652) discloses a zinc alloy powder for an alkaline battery, which contains: 170-230 ppm of Al; less than or equal to 121-225 ppm of Bi; 150-250 ppm of In; less than or equal to 10 ppm of an unavoidable impurity including at least one of magnesium, iron, copper, lead, nickel, cobalt, and manganese; and a remainder amount of zinc. The zinc alloy powder is characterized in that: a ratio of a powder of less than or equal to 200 mesh is greater than or equal to 10 mass %; a ratio of a powdery material of 200 mesh to 150 mesh is 9 mass % to 20 mass %; a ratio of a powdery material of 150 mesh to 100 mesh is 18 mass % to 40 mass %; a ratio of a powdery material of 100 mesh to 50 mesh is 20 mass % to 40 mass %; a ratio of a powdery material of 50 mesh to 40 mesh is 3 mass % to 17 mass %; a ratio of a powder of greater than or equal to 40 mesh is less than 7 mass %; and the total of the ratios of the powdery materials is 100 mass %.

### CITATION LIST

### Patent Literature

PTL 1: Japanese Patent No. 6335531
PTL 2: Japanese Patent No. 4729321
PTL 3: Japanese Patent Laid-Open Publication No. 2014-7002
PTL 4: Japanese Patent Laid-Open Publication No. 2014-170652

### SUMMARY

An alkaline battery according to one aspect of the present disclosure includes a positive electrode, a negative electrode, and a separator disposed between the positive electrode and the negative electrode. The negative electrode contains zinc alloy powder, gelling agent, surface active agent, and electrolyte. The zinc alloy powder includes zinc alloy particles. A proportion of the zinc alloy particles with respect to zinc alloy powder that pass through a mesh having an aperture width of 75 µm ranges from 9 mass % to 28 mass %. The zinc alloy powder has a bulk density ranging from 2.7 g/cm³ to 3.2 g/cm³. A content of the zinc alloy powder in the negative electrode ranges from 60 mass % to 64 mass %.

This alkaline battery prevents a temporary decrease of open circuit voltage.

### BRIEF DESCRIPTION OF THE DRAWINGS

FIG. 1A is a conceptual view of zinc alloy powder of an alkaline battery according to an exemplary embodiment.
FIG. 1B is an enlarged cross-sectional view of a mesh according to the exemplary embodiment.
FIG. 2 is a partially exploded cross-sectional view illustrating an example of the alkaline battery according to the exemplary embodiment.

### DESCRIPTION OF EMBODIMENTS

Exemplary embodiments of the present disclosure will be described below with reference to examples. It should be noted, however, that the present disclosure is not limited to the following examples. The following description may indicate specific numerical values and specific materials as examples, but it is possible to use other numerical values and other materials insofar as the invention according to the present disclosure can be embodied. In this description, the phrase "numerical value A to numerical value B" means to include numerical value A and numerical value B, inclusive, and it is interchangeable with the phrase "greater than or equal to numerical value A and less than or equal to numerical value B." In the following description, when one or more lower limit values and one or more upper limit values of specific physical properties and conditions are shown as examples, the upper limit and the lower limit may be set by combining any one value of the exemplified one or more lower limit values with any one of the exemplified one or more upper limit values, unless the lower limit becomes greater than or equal to the upper limit.

### Alkaline Battery

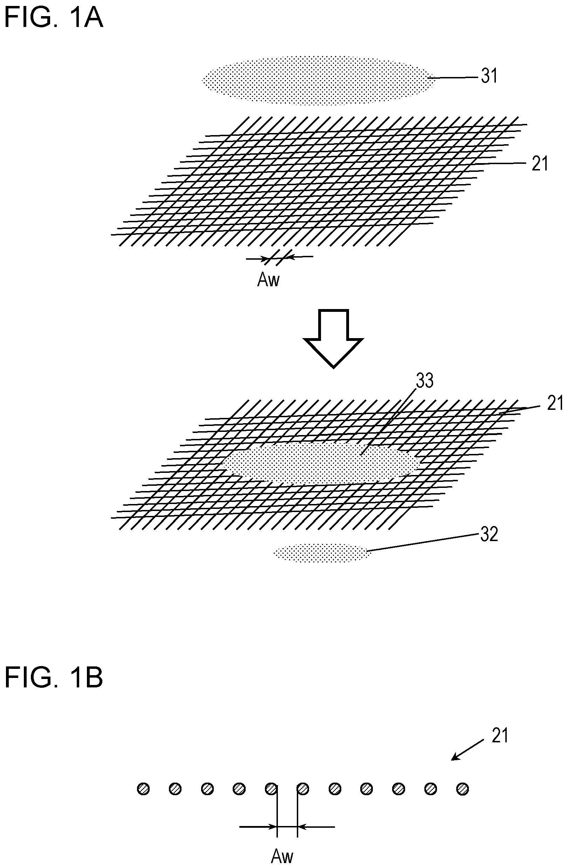

An alkaline battery according to an exemplary embodiment includes a positive electrode, a negative electrode, and a separator disposed between the positive electrode and the negative electrode. The negative electrode contains zinc alloy powder, gelling agent, surface active agent, and electrolyte. FIG. 1A is a conceptual view of zinc alloy powder 31 of the alkaline battery according to the embodiment. FIG. 1B is an enlarged cross-sectional view of mesh 21 according to the embodiment. Mesh 21 has aperture width Aw. Zinc alloy powder 31 includes zinc alloy particles 32. A proportion of zinc alloy particles 32 that pass through mesh 21 having an aperture width Aw of 75 µm ranges from 9 mass % to 28 mass %. The bulk density of zinc alloy powder 32 ranges from 2.7 g/cm³ to 3.2 g/cm³. The content of zinc alloy powder 32 in the negative electrode ranges from 60 mass % to 64 mass %. Hereinafter, the proportion of zinc alloy particles 32 of zinc alloy powder 31 that pass through mesh 21 having an aperture width Aw of 75 µm is referred to as proportion R(75). The alkaline battery includes, in addition to the electrolyte contained in the negative electrode, electrolyte in portions other than the negative electrode.

In the manufacturing of alkaline batteries, a test is often performed on the manufactured alkaline batteries. For example, an open circuit voltage (OCV) of the alkaline batteries is measured. In the measurement of the OCV, a battery that shows an OCV less than or equal to a threshold value is treated as a defective product. In the measurement of the OCV, alkaline batteries with no defective are determined to be non-defective products, while alkaline batteries with defective are determined to be defective products.

However, as a result of a study, the inventors of the present application have discovered a problem that the OCV temporarily decreases during the OCV measurement, causing non-defective products of the alkaline batteries to be erroneously determined as defective products. This problem has not been known before. It is necessary to avoid such determination of non-defective products as defective products because it may lead to problems such as an increase in manufacturing costs.

The OCV is also referred to as open voltage, which is, in other words, the voltage of the battery when no current passes through the battery. The OCV corresponds to the difference between the open circuit potential (OCP) of the positive electrode and the OCP of the negative electrode. The OCP of the negative electrode depends on the potential of the zinc alloy particles, the negative electrode active material. IN the case that the negative electrode contains surface active agent, zinc alloy particles having a larger amount of the surface active agent adhering thereto exhibit higher surface potential. In the case that the negative electrode contains zinc alloy particles having a larger amount of the surface active agent adhering thereto and zinc alloy particles having a smaller amount of the surface active agent adhering thereto, the negative electrode contains therein zinc alloy particles with a higher surface potential and zinc alloy particles with a lower surface potential. The OCP of the negative electrode is determined by the zinc alloy particles with a lower surface potential. However, upon having an impact applied thereto, the alkaline battery has paths connecting the zinc alloy particles with a lower surface potential with each other cut, thereby causing the zinc alloy particles with a higher surface potential to have a greater influence on the OCP. Thus, the OCP of the negative electrode may change due to an impact applied to the alkaline battery in the OCV test, causing the OCV to temporarily decrease. The OCV that has temporarily decreased recovers after a certain time. This recovery indicates that the temporary decrease of the OCV is not due to a defect of the battery but due to the temporary change of the conductive paths in the negative electrode. For this reason, it is necessary to prevent the temporary decrease of OCV in order to avoid non-defective alkaline batteries being determined as defective.

In this description, the phrase "temporary decrease of the OCV" means that the OCV(1) of an alkaline battery that is measured after the alkaline battery has been manufactured (for example, for the battery within 7 days after the manufacturing) temporary decreases due to an impact. In cases where the batteries are mass-produced, the batteries are processed continuously, so that the batteries may have an impact applied thereto in the OCV measurement. The temporary decrease of the OCV means that OCV(1) of a battery is an OCV that is determined as defective, but the OCV that is measured after a certain time has elapsed (hereinafter may also be referred to as "OCV(2)") is an OCV that is determined as that of a non-defective battery. The OCV that is determined as that of a defective battery is a voltage less than or equal to (mode V - 3 mV), based on mode value V of the OCVs measured for a large number (e.g., 100 or more) of alkaline batteries that were manufactured under the same conditions. In other words, when OCV (1) of a battery is less than or equal to (mode value V - 3 mV), the battery is determined as defective. Then, when the OCV(2) of the battery that was determined as defective is measured again later than 3 minutes or longer after the measurement of the OCV(1) is higher than (mode value V - 3 mV), it is determined that the battery had a temporary decrease of the OCV. The OCV measurement is conducted at room temperature (about 25°C). Mode value V of the OCV means the value of OCV that is exhibited the most frequently in distribution when the OCV, expressed in units of volts (V), is measured so that the significant digits are 3 digits after the decimal point.

The temporary decrease of the OCV is likely to occur especially during a short period of time after the manufacturing of the battery, during which component materials of the battery have not yet been conditioned. After a certain period of time has elapsed after the manufacturing, the component materials of the battery are conditioned, so the temporary decrease of OCV may be less likely to occur. The negative electrode which does not contains surface active agent doses not substantially have the temporary decrease of OCV.

The negative electrode containing the surface active agent prevents corrosion of zinc alloy powder in the alkaline electrolyte and consequent generation of hydrogen gas. Hydrogen gas generated inside the battery causes an increase of the internal pressure and an increase of a leakage of the electrolyte. For this reason, in order to enhance the reliability of the alkaline battery, the negative electrode contains the surface active agent.

The alkaline battery according to the present disclosure satisfies the following conditions (1)-(4):
(1) A proportion of zinc alloy particles 32 in zinc alloy powder 31 that pass through a mesh having an aperture width of 75 µm ranges from 9 mass % to 28 mass %;
(2) the content of zinc alloy powder 31 in the negative electrode ranges from 60 mass % to 64 mass %;
(3) The bulk density of zinc alloy powder 31 ranges from 2.7 g/cm³ to 3.2 g/cm³; and
(4) The negative electrode contains zinc alloy powder 31, gelling agent, surface active agent, and electrolyte.

The battery satisfying the conditions (1)-(4) prevents a temporary decrease of the OCV and prevents non-defective products from being determined as defective products. The temporary decrease of the OCV is reliably prevented by satisfying the conditions (1)-(4), as shown in Examples, although the reasons are not clearly found.

The temporary decrease of the OCV is prevented by satisfying the conditions (1)-(4) for the following reason. First, the satisfying of the conditions (1) and (2) increase the viscosity of the negative electrode. More specifically, proportion R(75) of 9 mass % or higher and the content of the zinc alloy powder in the negative electrode to be 60 mass % or higher increase the viscosity of the negative electrode. The increasing of the viscosity of the negative electrode prevents the conductive paths between the zinc alloy particles from being cut.

The satisfying of the condition (3) prevents the temporary decrease of the OCV more significantly. This may be due to the fact that satisfying the condition (3) allows the number of contact points of the zinc alloy particles that constitute zinc alloy particles 31 with each other to fall within an appropriate range, although the reason is not clear. Both an excessively large number and an excessively small number of contact points of the zinc alloy particles with each other may result in forming of conductive paths through higher potential zinc alloy particles when the conductive paths between the zinc alloy particles are cut due to an impact, which consequently increases the OCP of the negative electrode.

Furthermore, the negative electrode containing the gelling agent prevents the zinc alloy particles from moving when an impact is applied to the alkaline battery. As a result, the temporary decrease of OCV can be prevented more significantly.

In order to prevent the temporary decrease of OCV, all the conditions (1)-(4) may be satisfied. The conditions (1)-(4) affect to exhibit a synergistic effect to prevent the temporary decrease of the OCV. The temporary decrease of the OCV is caused for so many reason that the causes and to solutions thereto may be hardly identified. However, the inventors of the present application have discovered that, as a result of study focusing on contact points on zinc alloy powder particles, the temporary decrease of OCV is prevented by a combination hardly predicted, i.e., the combination of the conditions (1)-(4). The alkaline battery according to the present disclosure is provided based on this new discovery.

With regard to condition (1), mesh 21 with an aperture width of 75 µm may employ a wire net for a standard sieve with an aperture width Aw of 75 µm defined in JIS Z 8801. Proportion R(75) of zinc alloy particles 32 of zinc alloy powder 31 that pass through mesh 21 having an aperture width of 75 µm ranges from 9 mass % to 29 mass %, and prevents the temporary decrease of the OCV. Furthermore, proportion R(75) less than or equal to 28 mass % prevents minute zinc alloy particles from generating gas, thereby reducing a risk of electrolyte leakage. Therefore, proportion R(75) may be preferably less than or equal to 28 mass %. Proportion R(75) may be greater than or equal to 15 mass %.

With regard to condition (2), the content of zinc alloy powder in the negative electrode is the proportion (mass ratio) of zinc alloy powder that occupies the negative electrode, and more specifically, is the proportion (mass ratio) of zinc alloy powder with respect to the total mass of the constituent elements in the negative electrode (zinc alloy powder, electrolyte, gelling agent, surface active agent, and other optional additives).

The content of zinc alloy powder in the negative electrode ranging from 60 mass % to 65 mass % prevents the temporary decrease of the OCV. Furthermore, the content less than or equal to 64 mass % enhances productivity of the battery. For this reason, the content may preferably be less than or equal to 64 mass %. The content may be greater than or equal to 61 mass %, greater than or equal to 62 mass %, or greater than or equal to 63 mass %. The content may be less than or equal to 63 mass %.

With regard to condition (3), the bulk density may be measured according to JIS Z 2504 (orifice diameter Φ: 2.5 mm). The lower the bulk density value of the powder, the more bulky the particles that constitute the powder. The bulk density of the zinc alloy powder is higher than or equal to 2.7 g/cm³. The bulk density of the zinc alloy powder may be higher than or equal to 2.8 g/cm³, higher than or equal to 2.9 g/cm³, or higher than or equal to 3.0 g/cm³. The bulk density of the zinc alloy powder is lower than or equal to 3.2 g/cm³. The bulk density of the zinc alloy powder may be lower than or equal to 3.1 g/cm³ or lower than or equal to 3.0 g/cm³.

Examples of the gelling agent include crosslinked polyacrylic acid, crosslinked polyacrylic acid partial sodium salts, and it is also possible to include other gelling agents. The gelling agent may either contain crosslinked polyacrylic acid alone, or may contain crosslinked polyacrylic acid and crosslinked polyacrylic acid partial sodium salt. The gelling agent may consist only of crosslinked polyacrylic acid and crosslinked polyacrylic acid partial sodium salt.

In the case that the gelling agent contains both crosslinked polyacrylic acid and crosslinked polyacrylic acid partial sodium salt, the mass ratio of them may satisfy (crosslinked polyacrylic acid) : (crosslinked polyacrylic acid partial sodium salt) = 1 : 0.5-4 (e.g., 1 : 1-3). This range prevents the temporary decrease of the OCV effectively.

The proportion of the gelling agent with respect to the total of the positive electrode, the negative electrode, and the electrolyte in the alkaline battery may range from 0.1 mass % to 0.4 mass % (for example, from 0.2 mass % to 0.3 mass %).

The surface active agent preferably contains anionic surface active agent containing an ethylene oxide group (-CH₂-CH₂-O-). This anion surface active agent may be hereinafter referred to as "anionic surface active agent (S)."

The anionic surface active agent (S) may contain a polyoxyethylene chain (plural linearly bonded ethylene oxide groups), a hydrophobic group bonded to one end (for example, oxygen atom) of the polyoxyethylene chain, and an anionic group bonded to the other end (for example, carbon atom) of the polyoxyethylene chain. An n number of linearly bonded ethylene oxide groups is represented as (-CH₂-CH₂-O-)ₙ.

The number of linearly bonded ethylene oxide groups may be greater than or equal to 3 or 4, and may be less than or equal to 6 or 5, or may be 3 or 4. The carbon number of the hydrophobic group may be greater than or equal to 4, 7, 10, or 12, and may be less than or equal to 20, 18, or 15. The hydrophobic group may be a hydrophobic group (for example, an alkyl group). Examples of the hydrophobic group include hydrocarbon groups having a carbon number of greater than or equal to 4 but less than or equal to 15 (for example, in a range of 10 to 15, or in a range of 12 to 15), for example, an alkyl group such as a linear alkyl group. Examples of the anionic group include phosphate group and carboxylic acid groups. The anionic surface active agent (S) may contain 3 to 6 linearly bonded ethylene oxide groups and a hydrophobic group having a carbon number in a range of 5 to 15. Such a configuration prevents the temporary decrease of the OCV effectively. In this case, the anionic group may be a phosphate group.

The proportion of the anionic surface active agent (S) with respect to the total of the positive electrode, the negative electrode, and the electrolyte in the alkaline battery may range from 0.0001 mass % to 0.01 mass % (for example, from 0.0002 mass % to 0.001 mass %). The portion of the anionic surface active agent added to the negative electrode migrates to the electrolyte and the negative electrode.

The alkaline battery according to the present disclosure includes a positive electrode, a negative electrode, a separator, and an electrolyte, and may further include other optional components, as necessary. Examples of constituent components of the alkaline battery according to the present disclosure will be described below.

### Positive Electrode

The positive electrode contains manganese dioxide as positive electrode active material. The positive electrode contains positive electrode active material and conductive agent, and may further contain a binder agent, as necessary. The positive electrode may be formed by pressure-molding positive electrode mixture to a cylindrical material (a positive electrode pellet). The positive electrode mixture contains, for example, positive electrode active material, conductive agent, and alkaline electrolyte, and may further contain binder agent, as necessary. The cylindrical material may be compressed so as to securely contact an inner wall of a case main body after having been accommodated inside the case main body.

A preferable example of the positive electrode active material, manganese dioxide, is electrolytic manganese dioxide, but may be natural manganese dioxide or chemical manganese dioxide. Examples of the crystal structure of manganese dioxide include α-type, β-type, γ-type, δ-type, ε-type, η-type, λ-type, and ramsdellite-type.

The mean particle diameter (D50) of manganese dioxide powder may range, for example, from 25 µm to 60 µm to facilitate filling the positive electrode and diffusing the electrolyte in the positive electrode.

From the viewpoints of formability and prevention of expansion of the positive electrode, the BET specific surface area of manganese dioxide may range, for example, from 20 m²/g to 50 m²/g. The BET specific surface area may be measured, for example, with a specific surface area measurement apparatus using nitrogen absorption.

The conductive agent may be electrically conductive carbon material. Examples of the electrically conductive carbon material include carbon black (such as acetylene black) and graphite. Examples of the graphite include natural graphite and artificial graphite. The conductive agent may be in a powder form. The mean particle diameter (D50) of the conductive agent may range from 3 µm to 20 µm. The content of the conductive agent in the positive electrode may range from 3 parts by mass to 10 parts by mass (for example, from 5 parts by mass to 9 parts by mass) with respect to 100 parts by mass of manganese dioxide.

In order to absorb the hydrogen generated inside the battery, silver compound may be added to the positive electrode. Examples of the silver compound include silver oxides (such as Ag₂O, AgO, and Ag₂O₃) and silver-nickel composite oxides (such as AgNiO₂).

### Negative Electrode

The negative electrode contains powder of zinc alloy as a negative electrode active material. From the viewpoint of corrosion resistance, the zinc alloy may contain at least one substance selected from indium, bismuth, and aluminum. In the zinc alloy, the indium content may range, for example, from 0.01 mass % to 0.1 mass %. In the zinc alloy, the bismuth content may range, for example, from 0.003 mass % to 0.02 mass %. In the zinc alloy, the aluminum content may range, for example, from 0.001 mass % to 0.03 mass %. In the zinc alloy, the content of elements other than zinc may range, for example, from 0.025 mass % to 0.08 mass % from the viewpoint of corrosion resistance.

The mean particle diameter (D50) of the zinc alloy powder may range, for example, from 100 µm to 200 µm (for example, from 110 µm to 160 µm), in order to facilitate filling the negative electrode and diffusing the electrolyte in the negative electrode. In this description, the term "mean particle diameter" means the median value of the diameter at which a cumulative volume is 50% in a volumetric particle diameter distribution. The median diameter is obtained, for example, with a laser diffraction/light scattering particle size distribution analyzer apparatus.

As described above, the negative electrode contains zinc alloy powder, gelling agent, surface active agent, and electrolyte. The negative electrode may be formed by mixing the zinc alloy powder, the gelling agent, the surface active agent, and the electrolyte with one another. In order to cause additives (such as the gelling agent and the surface active agent) to diffuse in the negative electrode more uniformly, the additives may be previously added to the electrolyte previously to be used in the preparation of the negative electrode. The electrolyte may employ an electrolyte described later (alkaline electrolyte).

In order to enhance corrosion resistance, compound containing metal with a high hydrogen overvoltage, such as indium or bismuth, may be added to the negative electrode.

### Negative Electrode Current Collector

The alkaline battery according to the present disclosure may include a negative electrode current collector inserted in the negative electrode. The negative electrode current collector may be made of a metal (single metal or alloy). The negative electrode current collector may preferably contain copper, or may be made of an alloy containing copper and zinc (for example, brass). The negative electrode current collector may be plated with, e.g., tin, as necessary.

### Separator

The separator may be made of nonwoven fabric containing fiber as its main component, microporous resin film, or the like. Examples of the fibers include cellulose and polyvinyl alcohol. The nonwoven fabric may be formed by mixing cellulose fibers and polyvinyl alcohol fibers, or by mixing rayon fibers and polyvinyl alcohol fibers. Examples of the material for the microporous film include resins, such as cellophane and polyolefin. The thickness of the separator may range from 200 µm to 300 µm. Plural thin separators may be stacked on one another to have the above thickness.

### Electrolyte

The electrolyte (alkaline electrolyte) may employ aqueous alkaline solution containing, e.g., potassium hydroxide. The concentration of potassium hydroxide in the alkaline electrolyte preferably ranges from 30 mass % to 50 mass % (for example, from 30 mass % to 40 mass %). The alkaline electrolyte may contain lithium hydroxide (LiOH), sodium hydroxide (NaOH), cesium hydroxide (CsOH), or rubidium hydroxide (RbOH).

The alkaline electrolyte may contain surface active agent. The surface active agent facilitates the negative electrode active material particles to disperse. Examples of the surface active agent may include those listed for the negative electrode. The content of the surface active agent in the alkaline electrolyte may range from 0 mass % to 0.5 mass % (for example, from 0 mass % to 0.2 mass %).

### Battery Housing

The battery housing is not particularly limited, and may be a housing with a shape corresponding to the shape of the battery. The shape of the alkaline battery according to the present disclosure may include, but is not particularly limited to, a cylindrical shape and a coin shape (including a button shape). The battery housing includes a battery case, a negative electrode terminal plate, and a gasket. The battery case may employ, for example, a closed-bottomed cylindrical metallic case. The metallic case may be made of, for example, a nickel plated steel plate. In order to reduce the contact resistance between the positive electrode and the battery case, the inner surface of the battery case may be coated with a carbon film. The negative electrode terminal plate may be made of material, such as a nickel plated steel plate, similar to the metallic case.

Examples of the material of the gasket include polyamide, polyethylene, polypropylene, polyphenyl ether, and polyphenylene ether. From the viewpoint of corrosion resistance to the alkaline electrolyte, materials of the gasket may preferably include polyamide-6,6, polyamide-6,10, polyamide-6,12, and polypropylene. The gasket includes a locally-thin portion with an annular shape.

### Manufacturing Method of Alkaline Battery

While a method of manufacturing the alkaline battery according to the present disclosure is not particularly limited, the alkaline battery may be manufactured by a known method. The negative electrode may be prepared by mixing the materials of the negative electrode, as described in Examples.

Proportion R(75) may be controlled by, for example, changing the mixture ratio of zinc alloy powder 32 that have passed through a mesh with an aperture width of 75 µm with respect to zinc alloy powder 33 (see FIG. 1A) that have not passed through the mesh. The mean particle diameter of the zinc alloy powder may be controlled by changing the mixture ratio of zinc alloy powders that have passed through various meshes.

The bulk density of the zinc alloy powder may be controlled by changing the mean particle diameter or particle diameter distribution of the zinc alloy powder, or the shapes of particles of the zinc alloy powder. Various zinc alloy powders that have various mean particle diameters, particle diameter distributions, and shapes are available in the market. The bulk density may be controlled by using such products. In the case of zinc alloy powder with a uniform particle diameter, the greater the particle diameter, the less the bulk density.

The contents of components in the negative electrode (for example, the content of the zinc alloy powder) may be controlled by changing the mixture ratio of the components when the negative electrode is constructed.

Exemplary embodiments of the present disclosure will be detailed below with reference to drawings. The above-described constituent components may be applied to the following exemplary embodiments of the alkaline battery. In addition, the constituent components of the alkaline battery in the examples described below may be modified based on the description described above. The matters described below may be applied to the above-described exemplary embodiments.

### Exemplary Embodiment 1

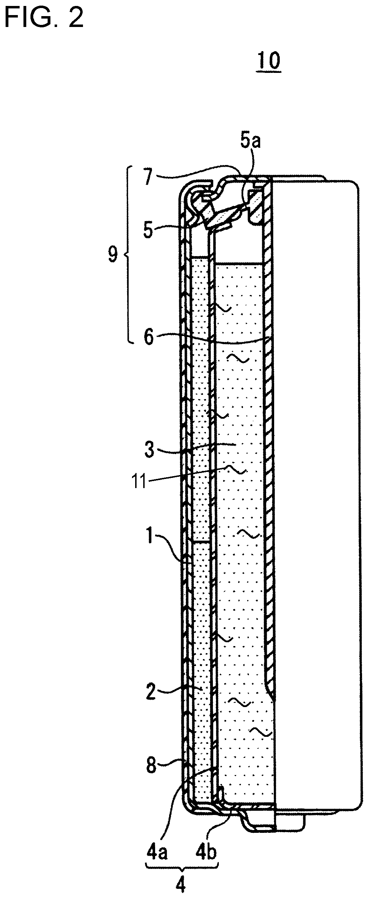

FIG. 2 shows a partially exploded cross-sectional view of alkaline battery 10 having an inside-out structure according to Exemplary Embodiment 1. Alkaline battery 10 with a cylindrical shape includes battery case 1 and positive electrode 2, negative electrode (gelled negative electrode) 3, separator 4, and electrolyte 11 disposed inside battery case 1.

Battery case 1 is a cylindrical case having a bottom, and functions as a positive electrode terminal. Positive electrode 2 has a cylindrical shape with a hollow and is disposed to contact an inner wall of battery case 1. Negative electrode 3 is disposed in the hollow of positive electrode 2. Separator 4 is disposed between positive electrode 2 and negative electrode 3. The negative electrode has the above-described structure.

Separator 4 includes cylindrical tubular separator 4a and bottom sheet 4b. Separator 4a is disposed along the inner surface of the hollow portion of positive electrode 2 to isolate positive electrode 2 from negative electrode 3. Bottom sheet 4b is disposed at a bottom of the hollow of positive electrode 2 to isolate negative electrode 3 from battery case 1.

An opening of battery case 1 is sealed with sealing unit 9. Sealing unit 9 includes gasket 5, negative electrode current collector 6, and negative electrode terminal plate 7 which functions as the negative electrode terminal. Negative electrode current collector 6 has a nail shape including a head part and a body part. Negative electrode current collector 6 contains, e.g., copper, and may be made of alloy, such as brass containing copper and zinc. Negative electrode current collector 6 may be plated with, e.g., tin, as necessary. The body part of negative electrode current collector 6 is inserted in a through hole provided in a central part of gasket 5 and in negative electrode 3. The head part of negative electrode current collector 6 is welded to a flat portion of negative electrode terminal plate 7 at the center of negative electrode terminal plate 7.

An open end of battery case 1 is fixed onto a circumferential edge (flange portion) of negative electrode terminal plate 7 via a circumferential edge of gasket 5. The outer surface of battery case 1 is covered with outer label 8. Battery case 1, gasket 5, and negative electrode terminal plate 7 constitute the battery housing. Positive electrode 2, negative electrode 3, separator 4, and alkaline electrolyte 11 are disposed inside the battery housing.

A method of manufacturing alkaline battery 10 is not particularly limited, and it is possible to apply conventional techniques as needed. For example, the battery may be manufacture by the procedure described in the following examples.

### EXAMPLES

The alkaline battery according to the present disclosure will be detailed below with reference to examples thereof.

### Experimental Example 1

In Experimental Example 1, plural alkaline batteries including different negative electrodes were prepared by the following procedures (1)-(4) and evaluated.

### (1) Preparation of Electrolyte 11 (Alkaline Electrolyte)

As alkaline electrolyte 11, an aqueous alkaline solution containing potassium hydroxide (concentration: 33 mass %) and zinc oxide (concentration: 2 mass %) was prepared.

### (2) Preparation of Positive Electrode

Manganese dioxide (positive electrode active material) and graphite (conductive agent) were mixed, providing a mixture. The materials were mixed in a mass ratio of manganese dioxide : graphite = 100 : 6. For the manganese dioxide, electrolytic manganese dioxide powder (with mean particle diameter (D50) of 40 µm) was used. For the graphite, graphite powder (with mean particle diameter (D50) of 8 µm) was used.

The electrolyte was added to the above-described mixture, and the mixture was agitated sufficiently, and thereafter compression molded in a flake state, thereby providing a positive electrode mixture. The mass ratio of the mixture to the electrolyte was set to mixture : electrolyte = 100 : 1.5. The electrolyte used was the same electrolyte as the alkaline electrolyte prepared in the above-described (1).

Next, the flake-state positive electrode mixture was pulverized into a granular state, and the resultant material was classified with sieves with 10-100 meshes to obtain granules. The resultant granules were compressed and molded into a hollow cylindrical shape (height: 10.8 mm) to obtain a positive electrode pellet (mass: 2.9 g). Four of these positive electrode pellets were prepared.

### (3) Preparation of Negative Electrode

Zinc alloy powder, surface active agent, gelling agent, and electrolyte were mixed to obtain a gelled negative electrode. The materials other than zinc alloy powder were mixed in a mass ratio of surface active agent : gelling agent : electrolyte = 0.005 : 2.4 : 100. In Experimental Example 1, the content of zinc alloy powder in the negative electrode and proportion R(75) of zinc alloy particles of the zinc alloy powder that are capable of passing through a mesh with an aperture width of 75 µm were changes so that they result in the values shown in Table 1, to prepare plural negative electrodes. In all the negative electrodes, the bulk density of zinc alloy powder was 3.2 g/cm³. The electrolyte used was the same electrolyte as the alkaline electrolyte prepared in the above procedure (1). The negative electrode active material used was zinc alloy powder containing 0.02 mass % of indium, 0.01 mass % of bismuth, and 0.005 mass % of aluminum. The surface active agent used was an anionic surface active agent. The gelling agent used was a mixture of crosslinked polyacrylic acid and crosslinked polyacrylic acid partial sodium salt.

### (4) Assembly of Battery A1

Alkaline batteries were assembled with the above-described constituent components in the following method. Procedures for assembling a battery will be described with reference to FIG. 2. First, the inner surface of a cylindrical case made of nickel plated steel plate with a bottom was coated with a coating agent (product name: Vamiphite) made by Nippon Graphite Industries, Ltd. To form a carbon film with a thickness of about 10 µm, thus providing battery case 1. Next, 4 positive electrode pellets were inserted vertically into battery case 1 and then compressed, thereby forming positive electrode 2 securely contacting the inner wall of battery case 1. Cylindrical tubular separator 4 with a bottom was disposed inside positive electrode 2, and then, the alkaline electrolyte prepared in the above procedure (1) filled separator 4 to impregnate separator 4 with the electrolyte. They were left for a predetermined time so that the alkaline electrolyte may permeate from separator 4 to positive electrode 2. After that, 6.4 g of gelled negative electrode 3 fills separator 4. The negative electrode 3 used was one of the negative electrodes described above.

Separator 4 included cylindrical tubular separator 4a and bottom sheet 4b. Cylindrical tubular separator 4a and bottom sheet 4b used were made of nonwoven fabric sheets containing rayon fibers and polyvinyl alcohol fibers as main components mixed (in a mass ratio of 1 : 1).

Negative electrode current collector 6 was formed by pressing a brass to have a nail shape and then having a surface thereof plated with tin. The head part of negative electrode current collector 6 was electrically welded to negative electrode terminal plate 7 made of nickel plated steel plate. After that, the body part of negative electrode current collector 6 was press-fitted into the through hole in the center of gasket 5 made mainly of polyamide-6,12. Sealing unit 9 including gasket 5, negative electrode current collector 6, and negative electrode terminal plate 7 was thus prepared. Gasket 6 shown in FIG. 2 includes locally-thin portion 5a with an annular shape.

Next, sealing unit 9 was disposed on an opening of battery case 1. At this moment, the body part of negative electrode current collector 6 was inserted into negative electrode 3. Subsequently, an open end of battery case 1 was fixed onto a circumferential edge of negative electrode terminal plate 7 so as to crimp gasket 5, thereby sealing the opening of battery case 1. Positive electrode 2, negative electrode 3, separator 4, and alkaline electrolyte 11 were thus disposed inside the battery housing.

Next, the outer surface of battery case 1 was covered with outer label 8, thus preparing plural alkaline batteries including different negative electrodes.

### Measurement of OCV

The OCV of each of the prepared batteries was measured at room temperature (about 25°C) within 7 days after the preparation. Then, the batteries that showed an OCV value of lower than mode V of OCV by greater than or equal to 3 mV were determined as defective. It should be noted that 100 samples of each alkaline battery with a different negative electrode were prepared and evaluated. The evaluation results are shown in Table 1. The term "content of zinc alloy powder" in Table 1 indicates the content of zinc alloy powder in the negative electrode. Table 1 shows the results of the OCV measurement determined for 25 types of alkaline batteries in which the content of zinc alloy powder was varied in a range of 59% to 65% and proportion R(75) was varied in a range of 8% to 29%. In Table 1, the numerical values of 0% to 3% indicate the proportions of batteries that were determined as defective for each of the batteries with different negative electrodes.

**Table 1**

| | | Proportion R(75) | | | | |
|---|---|---|---|---|---|---|
| | | 8% | 9% | 15% | 28% | 29% |
| Content of zinc alloy powder | 59% | 3% | 3% | 2% | 1% | 1% |
| | 60% | 3% | 0% | 0% | 0% | 0% |
| | 63% | 3% | 0% | 0% | 0% | 0% |
| | 64% | 2% | 0% | 0% | 0% | 0% |
| | 65% | 1% | 0% | 0% | 0% | 0% |

The batteries that were determined as defective were left for a certain time and their OCVs were measured again. None of the batteries was determined as defective. The determination as defective in the first OCV measurement was due to the temporary decrease of the OCV.

The proportion of the batteries determined as defective due to the temporary decrease of the OCV were preferably less than or equal to 2%. For this reason, the content of zinc alloy powder preferably ranges from 60% to 65%, and proportion R(75) preferably ranges from 9% to 29%. In addition, for the above reason, the content of zinc alloy powder preferably ranges from 60% to 64%, and proportion R(75) preferably ranges from 9% to 28%.

Batteries among the above-described batteries with proportion R(75) of 9% and the content of zinc alloy powder of 59% and batteries among the above-described batteries with proportion R(75) of 8% and the content of zinc alloy powder of 63% were evaluated similarly while the bulk density was changed in a range from 2.7 g/cm³ to 3.2 g/cm³. The result was that when the bulk density ranged from 2.7 g/cm³ to 3.2 g/cm³, the defect determination ratio due to the temporary decrease of the OCV was reduced to less than or equal to 2%.

### Experimental Example 2

In Experimental Example 2, three types of negative electrodes containing different gelling agents were prepared. Other than the gelling agents, negative electrodes were prepared under the same conditions and in the same manner as in Experimental Example 1. In those negative electrodes, proportion R(75) was 9 mass %, the bulk density of zinc alloy powder was 3.2 g/cm³, and the content of zinc alloy powder in the negative electrode was 60 mass %. Except for the negative electrodes thus prepared, alkaline batteries were prepared under the same conditions and in the same manner as in Experimental Example 1.

As shown in Table 2, the gelling agent used was crosslinked polyacrylic acid and/or crosslinked polyacrylic acid partial sodium salt. The crosslinked polyacrylic acid used was "Carbopol 690" made by Lubrizol Corp. The crosslinked polyacrylic acid partial sodium salt used was "DK-500B" made by Sanyo Chemical Industries, Ltd.

10,000 samples of each of the three types of batteries were prepared. For each of the prepared batteries, the initial OCV was measured in the same manner as in Experimental Example 1 to determine their defective determination ratios. The compositions of the gelling agents and the evaluation results are shown in Table 2.

**Table 2**

| Battery | Gelling agent (mass ratio) | | Defective determination ratio |
|---|---|---|---|
| | Crosslinked polyacrylic acid | Crosslinked polyacrylic acid partial sodium salt | |
| A1 | 1 | 0 | 0% |
| A2 | 1 | 2 | 0% |
| A3 | 0 | 1 | 0.1% |

As shown in Table 2, battery A1 which used only crosslinked polyacrylic acid as the gelling agent, and battery A2 which used crosslinked polyacrylic acid and crosslinked polyacrylic acid partial sodium salt, exhibited a lower proportion of defective determination. As in the case of Experimental Example 1, the batteries determined as defective were those that were determined as defective due to a temporary decrease of the OCV, and they were in fact non-defective products.

### Experimental Example 3

In Experimental Example 3, four types of negative electrodes with different surface active agents were prepared. Other than the surface active agents, negative electrodes were prepared under the same conditions and in the same manner as in Experimental Example 1. In those negative electrodes, proportion R(75) was 9 mass %, the bulk density of zinc alloy powder was 3.2 g/cm³, and the content of zinc alloy powder in the negative electrode was 60 mass %. Except for the negative electrodes thus prepared, alkaline batteries were prepared under the same conditions and in the same manner as in Experimental Example 1.

The surface active agent used as polyoxyethylene alkyl ether phosphate. Polyoxyethylene alkyl ether phosphate is composed of a polyoxyethylene chain, a phosphate group bonded to one end (carbon atom) of the polyoxyethylene chain, and a linear alkyl group bonded to the other end (oxygen atom) of the polyoxyethylene chain. The polyoxyethylene chain is composed of a plurality of linearly bonded ethylene oxide groups.

The surface active agents used are listed in Table 3. The surface active agent used for Battery B1 was "Phosphanol RS-410", made by Toho Chemical Industries Co., Ltd. The surface active agent used for Battery B2 was "Phosphanol RL-310", made by Toho Chemical Industries Co., Ltd. The surface active agent used for Battery B3 was "Phosphanol RD-510Y", made by Toho Chemical Industries Co., Ltd. The surface active agent used for Battery B4 was "Phosphanol RS-610", made by Toho Chemical Industries Co., Ltd.

10,000 samples of each of the four types of batteries were prepared, and their initial OCVs were measured in the same manner as in Experimental Example 1. The compositions of the surface active agents and the measurement results are shown in Table 3. In Table 3, the number of ethylene oxide groups represents the number of the ethylene oxide groups contained in the polyoxyethylene chain. In Table 3, the carbon number of alkyl group represents the carbon number of the alkyl group bonded to the polyoxyethylene chain.

**Table 3**

| Battery | Surface active agent | | Defective determination ratio |
|---|---|---|---|
| | Number of ethylene oxide groups | Carbon number of alkyl group | |
| B1 | 3 | 13 | 0.1% |
| B2 | 3 | 18 | 0.2% |
| B3 | 4 | 12 | 0% |
| B4 | 6 | 13 | 0.1% |

As shown in Table 3, the defect rate was especially low when the number of ethylene oxide groups is 4 and the carbon number of the alkyl group is 12. As in the case of Experimental Example 1, the batteries determined as defective were those that were determined as defective due to a temporary decrease of the OCV, and were in fact non-defective products.

### INDUSTRIAL APPLICABILITY

The present disclosure is applicable to alkaline batteries.

### REFERENCE MARKS IN THE DRAWINGS

- 1: battery case
- 2: positive electrode
- 3: negative electrode
- 4: separator
- 5: gasket
- 6: negative electrode current collector
- 7: negative electrode terminal plate
- 8: outer label
- 9: sealing unit
- 10: alkaline battery
- 11: electrolyte

## Claims

1. An alkaline battery comprising:
a positive electrode, a negative electrode, and a separator disposed between the positive electrode and the negative electrode, wherein
the negative electrode contains zinc alloy powder, gelling agent, surface active agent, and electrolyte,
the zinc alloy powder includes zinc alloy particles, a proportion of the zinc alloy particles with respect to the zinc alloy powder that pass through a mesh having an aperture width of 75 µm ranging from 9 mass % to 28 mass %,
the zinc alloy powder has a bulk density ranging from 2.7 g/cm³ to 3.2 g/cm³, and
a content of the zinc alloy powder in the negative electrode ranges from 60 mass % to 64 mass %.

2. The alkaline battery according to claim 1, wherein the gelling agent contains crosslinked polyacrylic acid only, or contains crosslinked polyacrylic acid and crosslinked polyacrylic acid partial sodium salt.

3. The alkaline battery according to claim 1 or 2, wherein the surface active agent contains anionic surface active agent including an ethylene oxide group.

4. The alkaline battery according to claim 3, wherein the anionic surface active agent includes 3 to 6 linearly bonded ethylene oxide groups and a hydrophobic group having a carbon number ranging from 5 to 15.
